# EUROPEAN PATENT SPECIFICATION

(11) **EP 3 947 024 B1**
(45) Date of publication and mention of the grant of the patent: **29.10.2025**
(21) Application number: 20709640.5
(22) Date of filing: 25.02.2020
(51) Int. Cl.: B60L 53/18, B60L 53/31, H01B 7/06, H01R 13/56, H01R 35/02, H02G 3/04, H02G 11/00, H02G 15/007

(54) **A CABLE MANAGEMENT ARRANGEMENT FOR AN ELECTRIC VEHICLE CHARGING STATION, AND AN ELECTRIC VEHICLE CHARGING STATION**
KABELVERWALTUNGSANORDNUNG FÜR EINE LADESTATION FÜR ELEKTROFAHRZEUGE, UND LADESTATION FÜR ELEKTROFAHRZEUGE
AGENCEMENT DE GESTION DE CÂBLE POUR UNE STATION DE CHARGE DES VÉHICULES ÉLECTRIQUES, ET STATION DE CHARGE DES VÉHICULES ÉLECTRIQUES

(30) Priority: 05.04.2019 FI 20195280
(43) Date of publication of application: 09.02.2022
(73) Proprietor: Kempower Oyj, 15700 Lahti (FI)
(72) Inventor: KETTUNEN, Jari, 15700 Lahti (FI); JOKINEN, Petteri, 15700 Lahti (FI); FIHLMAN, Jussi, 15700 Lahti (FI); VEIKKOLAINEN, Mikko, 15700 Lahti (FI)
(74) Representative: Boco IP Oy Ab
(86) International application number: PCT/FI2020/050118
(87) International publication number: WO 2020/201616

(56) References cited:
- EP-A1- 3 459 785
- WO-A1-2012/043163
- WO-A1-2016/146948
- US-A- 4 252 161
- US-A- 5 306 999
- US-A1- 2013 257 373

## Description

### FIELD OF THE DISCLOSURE

The present disclosure relates to charging station for electric vehicles, and more particularly to a cable management arrangement for an electric vehicle charging station.

The present disclosure further concerns an electric vehicle charging station equipped with such a cable management arrangement.

### BACKGROUND OF THE DISCLOSURE

Electric vehicles require regular charging at charging stations by coupling a plug of a charging cable to a respective socket on the vehicle. As the position of the charging socket on the electric vehicle varies, there charging cable has to have a sufficient length to enable it to be coupled to the electric vehicle. This is particularly prominent with charging station associated with parking facilities, because the electric vehicle must be oriented in accordance with a parking space, and consequently the charging cable needs to have a sufficient length to reach the charging socket on any given position of the electric vehicle.

However, the length of the charging cable poses its own problems, as it is not desirable to have the charging cable laying on the ground, because this makes it susceptible to damage, for example by being run over by vehicles or people tripping on the cable. Additionally, in winter conditions there is a prominent risk of the cable freezing stuck with ice and or snow surrounding the charging station. Moreover, the plug of the charging cable may get damaged by being dropped on the ground or by being contaminated from dirt from the ground. EP 3 459 785 A1 and US 5 306 999 A each disclose a charging cable management arrangement for an electric vehicle charging station according to the state of the art.

Publication US 2013/0257373 A1 concerns a cable handler device with an elongated arm pivotally attached to a base, such that the arm is adapted to move in proximity to a charge receptacle, and a cable secure to the arm, the cable having a charge connector adapted to engage the charge receptacle. US Patent no 4,252,161 concerns a mast for use on a gasoline pump or pedestal wherein one end of a fuel dispensing coaxial hose is supported by the mast while the other end of the coaxial hose has a nozzle connected thereto.

### BRIEF DESCRIPTION OF THE DISCLOSURE

An object of the present disclosure is to provide a robust and reliable cable management arrangement for an electric vehicle charging station so as to protect the charging cable while enabling a sufficient length thereof to accommodate various positions of charging sockets on an electric vehicle.

The object of the disclosure is achieved by a cable management arrangement for an electric vehicle charging station, which is characterized by what is stated in the independent claims. The preferred embodiments of the disclosure are disclosed in the dependent claims.

The disclosure is based on the idea of having the charging cable running along with a first elongate resilient member extending substantially upright, such that the resilient member is configured to have a first bending stiffness so as to maintain an upright position when no external lateral load is applied to the charging cable, and so as to yield when an external lateral load is applied to the charging cable. In this way, improved reach of the charging cable is achieved by a user pulling the cable, thereby causing the resilient member to deform towards the user.

An advantage of the solution according to the disclosure is that a very reliable and robust arrangement is achieved while a sufficient length of the cable may be provided.

### BRIEF DESCRIPTION OF THE DRAWINGS

In the following the disclosure will be described in greater detail by means of preferred embodiments with reference to the accompanying drawings, in which
Fig.1 schematically illustrates an embodiment of the cable management arrangement according to the present disclosure when no external lateral load is applied on a charging cable, as seen as a side view.
Fig. 2 is a detailed schematically illustrates the embodiment of Fig. 1 when an external lateral load is applied on a charging cable, as seen as a side view.
Fig. 3 is a detailed illustration of a portion of the cable management arrangement of Fig. 1, as seen as a cut view

### DETAILED DESCRIPTION OF THE DISCLOSURE

According to a first aspect of the present disclosure, a cable management arrangement 1 for an electric vehicle charging station, is provided.

The cable management arrangement 1 comprises a base 2, and a charging cable couplable to a power source at a first end 3a thereof. The charging cable 3 further comprises a connector 4 for coupling the charging cable 3 to an electric vehicle at a second end of the cable 3.

The cable management arrangement 1 further comprises a first elongate resilient member 5 supported from the base 2 and extending substantially upright therefrom. Most suitably, the first resilient member 5 is a first hollow cylindrical member 5, such as a tubular piece made of a resilient material, or a coil spring 5.

Particularly, a first portion of the charging cable 3c is arranged to run along with the first resilient member 3, while the first resilient member 5 is configured to support the first portion 3c of the charging cable 3, such that the first portion 3c extends substantially upright from the base 2 along with the first resilient member 5. Most suitably, the first portion 3c of the charging cable 3 is arranged to run within the first hollow cylindrical member 5, while the first hollow cylindrical member 5 is configured to fit tightly around the first portion 3c of the charging cable 3 so as to support the first portion 3c.

Suitably, the charging cable is also attached to the base 2. For example, the charging cable 3 may be attached to the base 2 at the first end 3a thereof, or at an intermediate portion of the charging cable 3 between the first end 3a and a first portion 3c thereof. Moreover, the charging cable 3 may extend from within or through the base 2, such that the first portion 3c extends upwardly directly from the base 2.

Most suitably, the charging cable 3 extends from the base 2 to run along with the first resilient member 5. The charging cable 3 may, for example, be attached to the base and / or run partially through it. This enables the charging cable 3 to be configured such it runs parallel with the first resilient member 5 before being supported by the first resilient member 5, thus reducing the bending radius of the charging cable 3 at or in the vicinity of the proximal end 5a of the first resilient member 5 during an deformation of the first resilient member 5 caused by an external lateral load applied on the charging cable 3.

It should be noted, however, that the first resilient member 5 may be provided in alternative ways (i.e., non-hollow and non-cylindrical members), for example as an elongate rod made of a resilient member or an elongate leaf spring. Naturally, in such a case, the first portion 3c of the charging cable 3 should be supported by the first resilient member with one or more fasteners.

Moreover, the first resilient member 5 is further configured to have a first bending stiffness so as to maintain an upright position when no external lateral load is applied to the charging cable 3.

Naturally, the first bending stiffness may be varied depending on the characteristics of the charging cable 3. For example, cables having a thicker diameter tend to have a larger minimum bend radius and a heavier weight, and respectively, cables having a thinner diameter tend to have a smaller minimum bend radius and a lighter weight. Correspondingly, a higher first bending stiffness is generally required for thicker cables, where as a lower first bending stiffness is generally typically sufficient for thinner cables, comparatively.

This configuration enables the first resilient member 5 to maintain substantially upright when no external lateral force is applied on the charging cable, i.e. under the cable's 3 own weight, while enabling the first resilient member 5 to yield when an external lateral load is applied. In the context of this disclosure, the term external lateral load is used to depict, for example, a user pulling the charging cable.

The first resilient member 5 does not need to be exactly vertical to the horizontal plane, nor does it need to be exactly straight, but it may be inclined from the vertical, have a curvature, or both, under a force caused by the weight of the charging cable itself 3. Preferably, the general orientation of the first resilient member 5 (i.e. the orientation of a straight line connecting the opposing ends of the first resilient member 5) is inclined from the vertical to the horizontal plane by no more than 45 deg, more preferably by no more than 15 deg and most preferably by no more than 5 deg, when no external load is applied to the charging cable.

Furthermore, the cable management arrangement 1 comprises a cable guide 7 arranged at a distal end 5b of the first resilient member 5. Such a cable guide 7 is configured to prevent a portion of the charging cable 3 extending out of the first resilient member 5 from exceeding a minimum bend radius. Most suitably, the cable guide 7 is configured to prevent a portion of the charging cable 3 extending out of the first resilient member 5 from exceeding a minimum bend radius during a curvature, i.e. a change of direction, following the charging cable 3 extending out form the distal end 5b of the first resilient member 5.

The purpose of the cable guide 7 is to prevent the charging cable from exceeding its minimum bending radius when it is hanging under its own weight from the distal end 5b of the first resilient member 5, and alternatively or additionally, when an external lateral load is exerted on the charging cable 3, e.g. by being pulled. The minimum bend radius is exceeded when the bend radius of the cable is smaller than the minimum bend radius defined for the cable in question, which may result in damage of the cable, particularly the insulation or conductors thereof.

For example, the cable guide 7 may be provided as a curved element, having a curvature with a radius not exceeding the minimum bend radius of the charging cable 3. Alternatively, or in addition, the cable guide may be provided as a second resilient member, as discussed in more detail later on in the description.

In an embodiment of the first aspect according to the disclosure, first the resilient member 5 comprises a portion of increased stiffness 6 arranged at a proximal end 5a of the first resilient member 5. This ensures, that when the first resilient member 5 deforms under an external lateral load applied on the charging cable 3, the deformation at the portion of increased stiffness 6 may be reduced, thereby reducing the risk of exceeding a minimum bend radius of the charging cable 3 at the proximal end 5a of the first resilient member 5.

Reducing deformation of the first resilient member 5 at the proximal end 5a thereof is important because the bending moment acting on the first resilient member 5, caused by an external lateral load applied on the charging cable 3, has reaches its maximum at the proximal end 5a of the first resilient member 5.

Preferably, but not necessarily, the portion of increased bending stiffness 6 has a length corresponding to 0,1 - 0,3 times of the overall length of the first resilient member 5. For example, the portion of increased bending stiffness 6 may have a length corresponding to 0,2 times of the overall length of the first resilient member 5.

By way of example, it has been found out that for a charging cable having a thickness of 19mm, a first resilient member 5 having an overall length of 1 meter and a portion of increased thickness having a length of 0,2 meters provides for suitable bending characteristics of the first resilient member 5 so as to prevent the charging cable from exceeding its minimum bending at the first portion 3c thereof.

Naturally, the relative length of the portion of increased stiffness 6 may be varied depending on the characteristics of the charging cable 3. For example, cables having a thicker diameter tend to have a larger minimum bend radius and a heavier weight, and respectively, cables having a thinner diameter tend to have a smaller minimum bend radius and a lighter weight. Correspondingly, a longer relative length of the portion of increased stiffness 6 with respect to the overall length of the first resilient member 5 is considered advantageous for thicker cables, whereas a shorter relative length of the portion of increased stiffness 6 with respect to the overall length of the first resilient member 5 is considered advantageous for thinner cables, comparatively.

Preferably, but not necessarily, the portion of increased bending stiffness 6 may be arranged by providing a sleeve 6' surrounding the first resilient member 5.

Suitably, in such a case, the sleeve 6' is attached to the base 2, and the first resilient member 5 is supported by being tightly fitted within the sleeve 6'.

It should be understood that the portion of increased bending stiffness 6 may alternatively be provided in other ways.

For example, if a coil spring is use as the first resilient member 5, the portion of increased bending stiffness 6 may be provide by arranging the coil spring to have a portion of decreased pitch at the proximal end 5a of the first resilient member 5.

The cable guide 7 is provided as a second resilient member 7 having a second bending stiffness that is lower than the first bending stiffness. The deformation of the second resilient member 7 in part absorbs any load causing the charging cable 3 to bend after extending out of the distal end 5b of the first resilient member 5, thereby reducing the risk of the charging cable 3 exceeding its minimum bending radius thereat. The second resilient member 7 having a lower bending stiffness than the first resilient member 5 ensures that the force with which the charging cable 3 is supported against bending, caused by its own weight or by an external lateral load, is reduced gradually, thereby further minimizing the risk of the charging cable 3 being bent so as to exceed its minimum bending radius, while allowing the first resilient member 5 to be rigid enough to support the first portion 3c of the charging cable 3 at a substantially upright position.

Naturally, also the second bending stiffness may be varied depending on the characteristics of the charging cable 3. For example, cables having a thicker diameter tend to have a larger minimum bend radius and a heavier weight, and respectively, cables having a thinner diameter tend to have a smaller minimum bend radius and a lighter weight. Correspondingly, a higher second bending stiffness is generally required for thicker cables, where as a lower second bending stiffness is generally typically sufficient for thinner cables, comparatively.

In such a case, the first resilient member 5 and the second resilient member 7 are suitably configured with respect to each other such that the first resilient member 5 yields when an external lateral load less than that required to cause the second resilient 7 member to deform in to a curvature exceeding the minimum bend radius of the charging cable 3 is exerted on the charging cable 3.

This even further minimizes the risk of the charging cable being bent so as to exceed its minimum bending radius after extending out of the distal end 5a of the first resilient member 5.

Furthermore, the second resilient member 7 may suitably have a pre-defined curvature, such that the second resilient member 7 is biased to deform in the direction of the pre-defined curvature when an external lateral load is applied to the charging cable 3.

Most suitably, the second resilient member 7 is a second hollow cylindrical member 7, and the charging cable 3 is arranged to run within the second hollow cylindrical member 7.

For example, the second hollow cylindrical member 7 may be a tubular piece made of a resilient material, or a coil spring 7.

It should be noted, however, that the second resilient member may be provided in alternative ways (i.e., non-hollow and non-cylindrical members), for example as a rod made of a resilient member or a leaf spring. Naturally, in such a case, the charging cable 3 should be supported by the second resilient member with one or more fasteners.

In another embodiment of the first aspect according to the disclosure, the first resilient member 5 is a first coil spring.

This ensures a simple and robust structure of the first resilient member 5.

In another embodiment of the first aspect according to the disclosure, the second resilient member 7 is provided as a second coil spring 7.

This ensures a simple and robust structure of the second resilient member 7.

Preferably, but not necessarily, when both the first and second resilient members 5,7 are coil springs, the second coil spring 7 is attached to the distal end 5b of the first coil spring 5 by arranging the first coil spring 5 and the second coil spring 7 to concentrically overlap with each other such that the respective coils thereof interlock with each other.

This provides a secure attachment as the first and second resilient member 5, 7 are directly joined to each other with no intermediate attachment means, thereby eliminating the risk of such attachment means failing over time under repeated stress cycles.

In another embodiment of the first aspect according to the disclosure, the cable management arrangement 1 further comprises a grip 8 arranged at a distal end 7a of the cable guide 7 so as to cover it.

In addition to facilitating use of the cable management arrangement 1 for the user by providing a point to pull the first and second resilient members 5,7 towards the electric vehicle so as to achieve a sufficient reach for the charging cable 3, this also reduces the stress exerted on the connector 4 of the charging cable 3, as it does not need to be used for pulling the connector 4 towards the point of use.

Moreover, such a grip 8 protects the user and the electric vehicles from damage caused by any sharp edges of the second resilient member 7. Additionally, when a coil spring 7 is used as the second resilient member 7, such a grip prevents objects from being clinched between the coils of the spring when it deforms.

In another embodiment of the first aspect according to the disclosure, the cable management arrangement 1 further comprises a support structure 9 for supporting the base 2 at a distance from a ground level. In this context, the term ground level, is used depict the level of the ground or floor surrounding at the area surrounding the respective electrical vehicle charging station.

Supporting the cable management arrangement at a distance from the ground level protects the arrangement 1 from damage caused, for example by being accidentally kicked by a user or being hit by an electric vehicle.

Preferably, but not necessarily, the cable management arrangement 1 is configured such that the connector 4 of the charging cable is above the ground level when a portion of the charging cable 3 extending out of the first resilient member 5 is freely hanging. In this context, the term freely hanging means that the distal end of the charging cable 3b is not supported. That is, a portion of the charging cable 3 extending out of the first resilient member 5 is considered freely hanging also when cable guide 7 is provided at the distal end 5b.

This prevents the connector 4 from being damaged when being dropped, as it does not hit the ground.

Additionally, or alternatively, the cable management arrangement 1 may further comprise a socket 10 for receiving and holding the connector 4 of the charging cable, in which case the cable management arrangement 1 is suitably further configured such that a lowermost part of the charging cable 3 is above the ground level, when the connector 4 is received in the socket 10.

The prevents the charging cable from laying on the ground and being damaged, for example by being driven or stepped on. Additionally, this prevents the charging cable from being frozen stuck on the ground in winter conditions.

According to a second aspect of the present disclosure, an electric vehicle charging station is provided. The charging station comprises a power source configured to provide electrical power for charging an electrical vehicle, and a cable management arrangement according to any of the embodiment, or variants thereof, according to the first aspect of the present disclosure. Particularly, the power source is operationally coupled to the first end of the charging cable 3a such that electrical power may be transmitted from the power source to the electrical vehicle via the charging cable 3.

It should be noted that the power source does not need to be directly coupled to the charging cable 3, but may be coupled via an intermediate component.

Most suitably, the charging station is provided as a common assembly having the power source and the cable management arrangement 1 as a single unit.

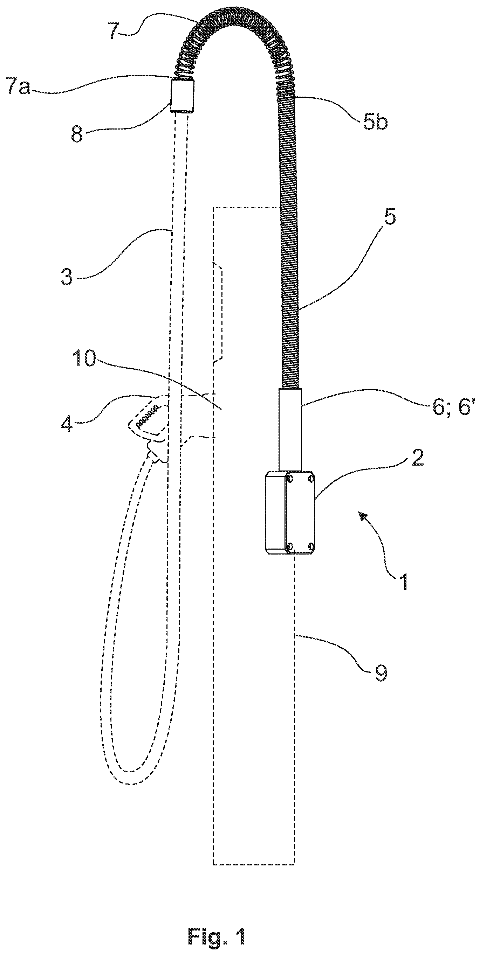

Fig.1 schematically illustrates an embodiment of the cable management arrangement according to the present disclosure as a side view.

Particularly, a charging cable 3 extending from the base run upwards within and supported by a first coil spring 5. A second coil spring 7, is concentrically and overlappingly attached to the distal end 5a of the first coil spring 5, while the cable 3 runs also within the second coil spring 7. The charging cable extending out of the first coil spring 5 bends downwardly within the second coil spring 7, which protects the cable from exceeding its minimum bending radius.

A connector 4 for coupling the cable 3 with an electric vehicle is provided at a distal end 3b of the cable 3. In the particular case of Fig. 1, the connector 4 is received and supported by a socket 10, and no external lateral load is applied on the charging cable 3.

Moreover, a portion of increased bending stiffness 6 is arranged at the proximal end (5a; not shown in Fig. 1) of the coil spring 5 by providing a sleeve 6' in which the proximal end 5a of the coil spring 5 is tightly fitted.

The distal end 7a of the second coil spring is equipped with a grip 8 covering the distal end 7a, for providing a suitable point for a user to grab and pull the cable 3 towards the point of use. The grip 8 also protects the user and / or the electric vehicle from damage caused by the distal end 7a.

In the particular situation of Fig. 1, the cable management arrangement 1 is supported by a support structure 9 formed by a part of the charging station.

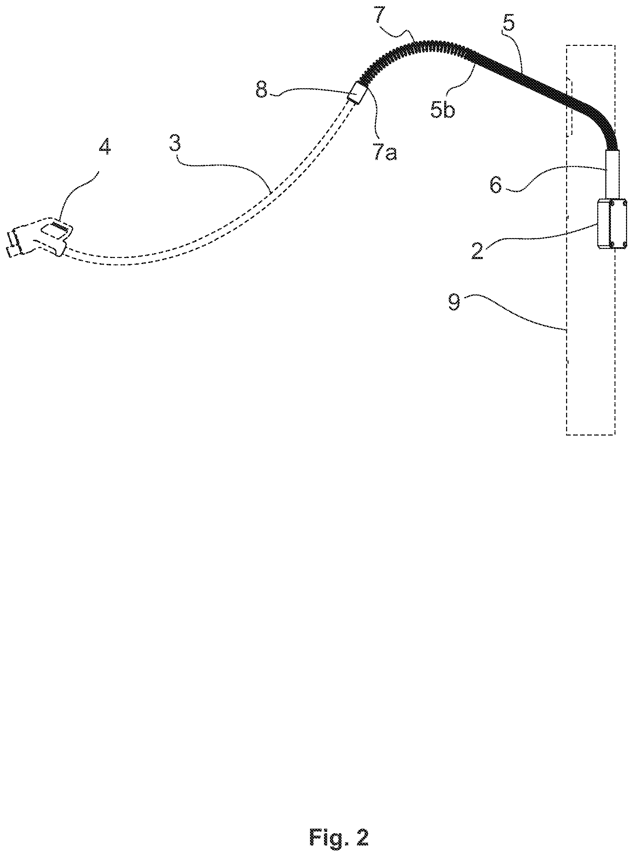

Fig.2 illustrates the cable management arrangement of Fig. 1 when an external lateral load is applied on the charging cable 3, i.e. when a user has bulled the cable 3 towards the use point so as to increase the reach of the charging cable 3.

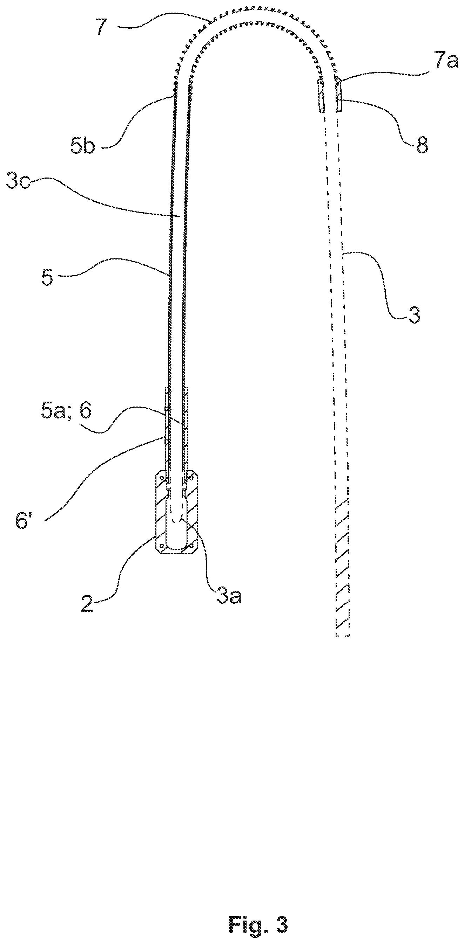

Fig.3, in turn, illustrates a portion of the cable management arrangement 1 of Fig. 1 as a cut view. Particularly, Fig. 3 more clearly illustrates the portion of increased bending stiffness arranged at the proximal end 5a of the first coil spring 5 by providing a sleeve 6' in which the proximal end 5a has been tightly received. Moreover, the attachment of the first and second coil spring 5, 7 by concentrically overlapping is more clearly visible in Fig. 3.

## Claims

1. A cable management arrangement (1) for an electric vehicle charging station, comprising:
a base (2);
a charging cable (3) couplable to a power source at a first end thereof, and comprising a connector (4) for coupling the charging cable (3) to an electric vehicle at a second end thereof (3b),
a first elongate resilient member (5) supported from the base (2) and extending substantially upright therefrom, the first resilient member being a first hollow cylindrical member (5), and
a cable guide (7) arranged at a distal (5b) end of the first resilient member (5),
wherein a first portion (3c) of the charging cable (3) is arranged to run along with the first resilient member (5), within the first hollow cylindrical member (5), and
wherein first the resilient member (5) is configured to fit tightly around the first portion (3c) of the charging cable (3) so as to support the first portion (3c) of the charging cable (3), such that the first portion (3c) extends substantially upright from the base (2) along with the first resilient member (5),
wherein the first resilient member (5) is configured to have a first bending stiffness so as to maintain an upright position when no external lateral load is applied to the charging cable (3),
wherein the cable guide (7) is configured to prevent a portion of the charging cable (3) extending out of the first resilient member (5) from exceeding a minimum bend radius during a curvature following the charging cable (3) extending out from the distal end (5b) of the first resilient member (5), and
**characterized in that** the cable guide (7) is provided as a second resilient member (7) having a second bending stiffness that is lower than the first bending stiffness.

2. The cable management arrangement according to Claim 1, **characterized in that** the first resilient member (5) comprises a portion of increased bending stiffness (6) arranged at a proximal end (5a) thereof.

3. The cable management arrangement (1) according to Claim 2, **characterized in that** the portion of increased bending stiffness (6) has a length corresponding to 0,1 - 0,3 times of the overall length of the first resilient member (5), preferably the portion of increased bending stiffness (6) has a length corresponding to 0,2 times of the overall length of the first resilient member (5).

4. The cable management arrangement (1) according to Claim 2 or 3, **characterized in that** the portion of increased stiffness (6) is arranged by providing a sleeve (6') surrounding the first resilient member (5).

5. The cable management arrangement (1) according to Claim 4, **characterized in that** the sleeve (6) is attached to the base (2), and wherein the first resilient member (5) is supported by being tightly fitted within the sleeve (6').

6. The cable management arrangement according to any of the preceding Claims , **characterized in that** the first resilient member (5) and the second resilient member (7) are configured with respect to each other such that the first resilient member (5) yields when an external lateral load less than that required to cause the second resilient (7) member to deform in to a curvature exceeding the minimum bend radius of the charging cable (3) is exerted on the charging cable (3).

7. The cable management arrangement according to any of the preceding Claims, **characterized in that** the second resilient member (7) has a pre-defined curvature, such that the second resilient member (7) is biased to deform in the direction of the pre-defined curvature when an external lateral load is applied to the charging cable (3).

8. The cable management arrangement according to any of the preceding Claims, **characterized in that** the second resilient member (7) is a second hollow cylindrical member (7), and
wherein and the charging cable (3) is arranged to run within the second hollow cylindrical member (7).

9. The cable management arrangement according to any of the preceding Claims, **characterized in that** the first resilient member (5) is a first coil spring (5).

10. The cable management arrangement according to any of the preceding Claims 8 or 9, **characterized in that** the second resilient member (7) is provided as a second coil spring (7).

11. The cable management arrangement according to Claim 10, **characterized in that** the second coil spring (7) is attached to the distal end (5b) of the first coil spring by arranging the first coil (5) spring and the second coil spring (7) to concentrically overlap with each other such that the respective coils thereof interlock with each other.

12. The cable management arrangement (1) according to any of the preceding Claims, **characterized by** further comprising a grip (8) arranged at a distal end (7a) of the cable guide (7) so as to cover it.

13. The cable management arrangement (1) according to any of the preceding Claims, **characterized by** further comprising a support structure (9) for supporting the base (2) at a distance from a ground level.

14. The cable management arrangement (1) according to Claim 13, **characterized by** being configured such that the connector (4) of the charging cable (3) is above the ground level when a portion of the charging cable (3) extending out of the first resilient member (5), is freely hanging.

15. The cable management arrangement according to Claim 13 or 14, **characterized by** further comprising a socket (10) for receiving and holding the connector (3) of the charging cable (3), and
wherein the cable management arrangement (1) being further configured such that a lowermost part of the charging cable (3) is above the ground level, when the connector (4) is received in the socket (10).

16. An electric vehicle charging station, comprising a power source configured to provide electrical power for charging an electrical vehicle, and
**characaterized** by further comprising a cable management arrangement (1) according to any of the preceding Claims 1-15, wherein the power source is operationally coupled to the first end (3a) of the charging cable (3) a such that electrical power may be transmitted from the power source to the electrical vehicle via the charging cable (3).

## Patentansprüche

1. Kabelmanagementanordnung (1) für eine Elektrofahrzeug-Ladestation, umfassend:
einen Sockel (2);
ein Ladekabel (3), das an ihrem ersten Ende mit einer Leistungsquelle gekoppelt werden kann und einen Steckverbinder (4) umfasst, um das Ladekabel (3) an ihrem zweiten Ende (3b) mit einem Elektrofahrzeug zu koppeln,
ein erstes längliches elastisches Element (5), das am Sockel (2) gelagert ist und im Wesentlichen aufrecht aus diesem herausragt, wobei das erste elastische Element ein erstes hohlzylindrisches Element (5) ist, und
eine Kabelführung (7), die an einem fernen (5b) Ende des ersten elastischen Elements (5) angeordnet ist,
wobei ein erster Teilabschnitt (3c) des Ladekabels (3) so angeordnet ist, dass er entlang des ersten elastischen Elements (5) innerhalb des ersten hohlzylindrischen Elements (5) verläuft, und
wobei das erste elastische Element (5) so ausgelegt ist, dass es den ersten Teilabschnitt (3c) des Ladekabels (3) eng umgreift, um den ersten Teilabschnitt (3c) des Ladekabels (3) zu stützen, so dass der erste Teilabschnitt (3c) zusammen mit dem ersten elastischen Element (5) im Wesentlichen aufrecht aus dem Sockel (2) ragt,
wobei das erste elastische Element (5) so ausgelegt ist, dass es eine erste Biegesteifigkeit aufweist, um eine aufrechte Stellung beizubehalten, wenn keine externe Seitenlast an das Ladekabel (3) angelegt wird,
wobei die Kabelführung (7) dazu ausgelegt ist, zu verhindern, dass ein aus dem ersten elastischen Element (5) herausragender Teilabschnitt des Ladekabels (3) im Zuge einer Krümmung im Anschluss an das aus dem fernen Ende (5b) des ersten elastischen Elements (5) herausragende Ladekabel (3) einen Mindestbiegeradius überschreitet, und
**gekennzeichnet dadurch, dass** die Kabelführung (7) als ein zweites elastisches Element (7) mit einer zweiten Biegesteifigkeit, die kleiner als die erste Biegesteifigkeit ist, vorgesehen ist.

2. Kabelmanagementanordnung nach Anspruch 1, **gekennzeichnet dadurch, dass** das erste elastische Element (5) einen an ihrem nahen Ende (5a) angeordneten Teilabschnitt von erhöhter Biegesteifigkeit (6) umfasst.

3. Kabelmanagementanordnung (1) nach Anspruch 2, **gekennzeichnet dadurch, dass** der Teilabschnitt von erhöhter Biegesteifigkeit (6) eine Länge aufweist, die dem 0,1-bis 0,3-fachen der Gesamtlänge des ersten elastischen Elements (5) entspricht, wobei vorzugsweise der Teilabschnitt von erhöhter Biegesteifigkeit (6) eine Länge aufweist, die dem 0,2-fachen der Gesamtlänge des ersten elastischen Elements (5) entspricht.

4. Kabelmanagementanordnung (1) nach Anspruch 2 oder 3, **gekennzeichnet dadurch, dass** der Teilabschnitt von erhöhter Steifigkeit (6) durch Bereitstellung einer das erste elastische Element (5) umgebenden Manschette (6') eingerichtet ist.

5. Kabelmanagementanordnung (1) nach Anspruch 4, **gekennzeichnet dadurch, dass** die Manschette (6) am Sockel (2) befestigt ist, und wobei das erste elastische Element (5) dadurch abgestützt wird, dass es eng in die Manschette (6') eingepasst ist.

6. Kabelmanagementanordnung nach einem der vorhergehenden Ansprüche, **gekennzeichnet dadurch, dass** das erste elastische Element (5) und das zweite elastische Element (7) in Bezug zueinander so ausgelegt sind, dass das erste elastische Element (5) nachgibt, wenn auf das Ladekabel (3) eine externe Seitenlast ausgeübt wird, die kleiner ist als die Last, die erforderlich ist, um zu bewirken, dass sich das zweite elastische Element (7) zu einer Krümmung verformt, die den Mindestbiegeradius des Ladekabels (3) überschreitet.

7. Kabelmanagementanordnung nach einem der vorhergehenden Ansprüche, **gekennzeichnet dadurch, dass** das zweite elastische Element (7) eine vordefinierte Krümmung dergestalt aufweist, dass das zweite elastische Element (7) so vorgespannt ist, dass es sich in der Richtung der vordefinierten Krümmung verformt, wenn eine externe Seitenlast an das Ladekabel (3) angelegt wird.

8. Kabelmanagementanordnung nach einem der vorhergehenden Ansprüche, **gekennzeichnet dadurch, dass** das zweite elastische Element (7) ein zweites hohlzylindrisches Element (7) ist, und
wobei das Ladekabel (3) so angeordnet ist, dass es innerhalb des zweiten hohlzylindrischen Elements (7) verläuft.

9. Kabelmanagementanordnung nach einem der vorhergehenden Ansprüche, **gekennzeichnet dadurch, dass** das erste elastische Element (5) eine erste Schraubenfeder (5) ist.

10. Kabelmanagementanordnung nach einem der vorhergehenden Ansprüche 8 oder 9, **gekennzeichnet dadurch, dass** das zweite elastische Element (7) als eine zweite Schraubenfeder (7) vorgesehen ist.

11. Kabelmanagementanordnung nach Anspruch 10, **gekennzeichnet dadurch, dass** die zweite Schraubenfeder (7) am fernen Ende (5b) der ersten Schraubenfeder befestigt ist, indem die erste Schraubenfeder (5) und die zweite Schraubenfeder (7) mit gegenseitiger konzentrischer Überlappung angeordnet sind, so dass ihre jeweiligen Windungen ineinandergreifen.

12. Kabelmanagementanordnung (1) nach einem der vorhergehenden Ansprüche, **gekennzeichnet dadurch, dass** sie ferner eine Griffhülse (8) umfasst, die an einem fernen Ende (7a) der Kabelführung (7) angeordnet ist, um dieses abzudecken.

13. Kabelmanagementanordnung (1) nach einem der vorhergehenden Ansprüche, **gekennzeichnet dadurch, dass** sie ferner eine Stützstruktur (9) umfasst, um den Sockel (2) in einem Abstand zu einer Bodenoberkante zu stützen.

14. Kabelmanagementanordnung (1) nach Anspruch 13, **gekennzeichnet dadurch, dass** sie so ausgelegt ist, dass sich der Steckverbinder (4) des Ladekabels (3) oberhalb der Bodenoberkante befindet, wenn ein aus dem ersten elastischen Element (5) herausragender Teilabschnitt des Ladekabels (3) frei hängt.

15. Kabelmanagementanordnung nach Anspruch 13 oder 14, **gekennzeichnet dadurch, dass** sie ferner eine Buchse (10) zur Aufnahme und Halterung des Steckverbinders (3) des Ladekabels (3) umfasst, und
wobei die Kabelmanagementanordnung (1) weiterhin so ausgelegt ist, dass sich ein unterster Teil des Ladekabels (3) oberhalb der Bodenoberkante befindet, wenn der Steckverbinder (4) in der Buchse (10) aufgenommen ist.

16. Elektrofahrzeug-Ladestation, die eine Leistungsquelle umfasst, die dazu ausgelegt ist, elektrische Leistung zum Laden eines Elektrofahrzeugs bereitzustellen, und
**gekennzeichnet dadurch, dass** sie ferner eine Kabelmanagementanordnung (1) nach einem der vorhergehenden Ansprüche 1 bis 15 umfasst, wobei die Leistungsquelle mit dem ersten Ende (3a) des Ladekabels (3) betriebswirksam gekoppelt ist, so dass elektrische Leistung über das Ladekabel (3) von der Leistungsquelle an das Elektrofahrzeug übertragen werden kann.

## Revendications

1. Dispositif de gestion de câble (1) pour une station de recharge de véhicule électrique, comprenant :
une base (2);
un câble de recharge (3) pouvant être couplé à une source de puissance par une première extrémité de celui-ci et comprenant un connecteur (4) pour coupler le câble de recharge (3) par une seconde extrémité de celui-ci (3b) à un véhicule électrique,
un premier élément élastique allongé (5) soutenu par la base (2) et dépassant de celle-ci essentiellement à la verticale, ledit premier élément élastique étant un premier élément cylindrique creux (5), et
un guide-câble (7) disposé à une extrémité distale (5b) du premier élément élastique (5),
dans lequel une première partie (3c) du câble de recharge (3) est agencée de manière à s'étendre le long du premier élément élastique (5) à l'intérieur du premier élément cylindrique creux (5), et
dans lequel le premier élément élastique (5) est configuré pour envelopper étroitement la première partie (3c) du câble de recharge (3) afin de soutenir la première partie (3c) du câble de recharge (3) de sorte que la première partie (3c) s'étend essentiellement à la verticale à partir de la base (2) le long du premier élément élastique (5),
dans lequel le premier élément élastique (5) est configuré pour avoir une première rigidité en flexion afin de maintenir une position verticale lorsqu'aucune charge latérale externe n'est appliquée au câble de recharge (3),
dans lequel le guide-câble (7) est configuré pour empêcher qu'une partie du câble de recharge (3) dépassant du premier élément élastique (5) dépasse un rayon de flexion minimal pendant une courbure à la suite de la sortie du câble de recharge (3) de l'extrémité distale (5b) du premier élément élastique (5), et
**caractérisé en ce que** le guide-câble (7) est prévu comme un deuxième élément élastique (7) ayant une deuxième rigidité en flexion qui est plus faible que la première rigidité en flexion.

2. Dispositif de gestion de câble selon la revendication 1, **caractérisé en ce que** le premier élément élastique (5) comprend une partie de rigidité en flexion accrue (6) disposée à une extrémité proximale (5a) de celui-ci.

3. Dispositif de gestion de câble (1) selon la revendication 2, **caractérisé en ce que** la partie de rigidité en flexion accrue (6) a une longueur qui correspond à 0,1 à 0,3 fois la longueur totale du premier élément élastique (5), ladite partie de rigidité en flexion accrue (6) ayant préférablement une longueur qui correspond à 0,2 fois la longueur totale du premier élément élastique (5).

4. Dispositif de gestion de câble (1) selon la revendication 2 ou 3, **caractérisé en ce que** la partie de rigidité accrue (6) est agencée par mise en place d'une gaine (6') entourant le premier élément élastique (5).

5. Dispositif de gestion de câble (1) selon la revendication 4, **caractérisé en ce que** la gaine (6) est attachée à la base (2), et dans lequel le premier élément élastique (5) est soutenu par ajustement étroit dans la gaine (6').

6. Dispositif de gestion de câble selon l'une des revendications précédentes, **caractérisé en ce que** le premier élément élastique (5) et le deuxième élément élastique (7) sont configurés l'un par rapport à l'autre de telle sorte que le premier élément élastique (5) cède lorsqu'une charge latérale externe plus faible que celle requise pour provoquer la déformation du deuxième élément élastique (7) en une courbure dépassant le rayon de flexion minimal du câble de recharge (3) est exercée sur le câble de recharge (3).

7. Dispositif de gestion de câble selon l'une des revendications précédentes, **caractérisé en ce que** le deuxième élément élastique (7) présente une courbure prédéfinie de telle sorte que le deuxième élément élastique (7) est précontraint de manière à se déformer dans la direction de la courbure prédéfinie lorsqu'une charge latérale externe est appliquée au câble de recharge (3).

8. Dispositif de gestion de câble selon l'une des revendications précédentes, **caractérisé en ce que** le deuxième élément élastique (7) est un deuxième élément cylindrique creux (7), et
dans lequel le câble de recharge (3) est disposé de manière à s'étendre à l'intérieur du deuxième élément cylindrique creux (7).

9. Dispositif de gestion de câble selon l'une des revendications précédentes, **caractérisé en ce que** le premier élément élastique (5) est un premier ressort hélicoïdal (5).

10. Dispositif de gestion de câble selon l'une des revendications précédentes 8 ou 9, **caractérisé en ce que** le deuxième élément élastique (7) est prévu comme un deuxième ressort hélicoïdal (7).

11. Dispositif de gestion de câble selon la revendication 10, **caractérisé en ce que** le deuxième ressort hélicoïdal (7) est attaché à l'extrémité distale (5b) du premier ressort hélicoïdal par un agencement de chevauchement concentrique du premier ressort hélicoïdal (5) et du deuxième ressort hélicoïdal (7) de telle sorte que leurs spires respectives s'emboîtent les unes dans les autres.

12. Dispositif de gestion de câble (1) selon l'une des revendications précédentes, **caractérisé en ce qu'**il comprend également un manchon (8) disposé à une extrémité distale (7a) du guide-câble (7) pour la recouvrir.

13. Dispositif de gestion de câble (1) selon l'une des revendications précédentes, **caractérisé en ce qu'**il comprend également une structure de support (9) pour supporter la base (2) à une distance du niveau du sol.

14. Dispositif de gestion de câble (1) selon la revendication 13, **caractérisé en ce qu'**il est configuré de telle sorte que le connecteur (4) du câble de recharge (3) soit au-dessus du niveau de sol lorsqu'une partie du câble de recharge (3) dépassant du premier élément élastique (5) pend librement.

15. Dispositif de gestion de câble selon la revendication 13 ou 14, **caractérisé en ce qu'**il comprend également une prise (10) pour recevoir et retenir le connecteur (3) du câble de recharge (3), et
dans lequel le dispositif de gestion de câble (1) est également configuré de telle sorte qu'une partie la plus basse du câble de recharge (3) soit au-dessus du niveau du sol lorsque le connecteur (4) est logé dans la prise (10).

16. Station de recharge de véhicule électrique, comprenant une source de puissance configurée pour fournir une puissance électrique pour recharger un véhicule électrique, et
**caractérisé en ce qu'**elle comprend également un dispositif de gestion de câble (1) selon l'une des revendications précédentes 1 à 15, dans lequel la source de puissance est couplée de manière opérationnelle à la première extrémité (3a) du câble de recharge (3) de telle sorte qu'une puissance électrique puisse être transmise de la source de puissance par le câble de recharge (3) au véhicule électrique.
